# EUROPÄISCHE PATENTSCHRIFT

(11) **EP 1 230 563 B1**
(45) Veröffentlichungstag und Bekanntmachung des Hinweises auf die Patenterteilung: **28.05.2003**
(21) Anmeldenummer: 00985013.2
(22) Anmeldetag: 11.11.2000
(51) Int. Cl.: G01S 5/26, G01S 5/22, G05B 19/418

(54) **VORRICHTUNG UND VERFAHREN ZUR ZUORDNUNG EINES WERKZEUGS ZU EINEM WERKSTÜCK**
DEVICE AND METHOD FOR ASSIGNING A TOOL TO A WORKPIECE
PROCEDE ET DISPOSITIF POUR ADJOINDRE UN OUTIL A UNE PIECE

(30) Priorität: 19.11.1999 DE 19955646
(43) Veröffentlichungstag der Anmeldung: 14.08.2002
(73) Patentinhaber: Bayerische Motoren Werke Aktiengesellschaft, 80809 München (DE)
(72) Erfinder: HOFER, Josef, 84160 Frontenhausen (DE); DONHARL, Robert, 84140 Gangkofen (DE)
(86) Internationale Anmeldenummer: EP0011186
(87) Internationale Veröffentlichungsnummer: WO01038897

(56) Entgegenhaltungen:
- EP-A- 0 492 015
- GB-A- 2 327 290
- US-A- 4 669 168
- PATENT ABSTRACTS OF JAPAN vol. 009, no. 257 (P-396), 15. Oktober 1985 (1985-10-15) & JP 60 107579 A (HITACHI SEISAKUSHO KK), 13. Juni 1985 (1985-06-13)

## Beschreibung

Die Erfindung betrifft eine Vorrichtung und ein Verfahren zur Zuordnung eines Werkzeugs zu einem Werkstück gemäß den Oberbegriffen der betreffenden unabhängigen Ansprüche.

Bei der Fließfertigung von Werkstücken können von Arbeitern betriebene Werkzeuge nur selten einem bestimmten zu bearbeitenden Teil zugeordnet werden. Insbesondere gibt es keine Möglichkeit festzustellen, wo sich ein Werkzeug in Bezug auf ein auf einem Montageband befindliches Werkstück befindet. So könnte es beispielsweise vorkommen, daß Werkstücke, beispielsweise Fahrzeuge, die Montage verlassen, ohne daß bestimmte Verschraubungen durchgeführt worden sind. Eine diesbezügliche Überprüfung ist nicht ohne weiteres möglich.

Aus der US-A-5 315 636 ist ein Verfahren und eine Vorrichtung zur Bestimmung der Position eines automatisierten geführten Trägers bekannt. Die differentialen Laufzeiten der Ultraschallwellen von drei Ultraschalltranspondem werden von einem Empfänger empfangen, um die Position des Trägers festzustellen.

Aufgabe der Erfindung ist es, eine Vorrichtung und ein Verfahren anzugeben, das die Zuordnung von Werkzeugen zu einem auf einem Montageband beförderten Werkstück zuläßt.

Diese Aufgabe wird durch die in den unabhängigen Ansprüchen genannten Merkmale gelöst.

Gemäß einem Kemgedanken der Erfindung wird die Position eines Werkzeugs entweder relativ zu einem Werkstück oder bezüglich eines ortsfesten Koordinatensysternes erfaßt und einem auf dem Montageband befindlichen Werkstück zugeordnet. Dabei ist jedem Werkstück eine bestimmte Identifikation (z.B. Produktionsoder Fahrgestellnummer) zugeordnet. Die Erfassung der Position des Werkzeugs erfolgt über die Auswertung der Laufzeiten von Signalen, die von einem Sender ausgegeben und von einem Empfänger aufgenommen werden. Über Winkelfunktionen kann die Position des Werkzeugs errechnet werden. Je nach Ausführungsbeispiel ist an dem Werkzeug ein Sender oder ein Empfänger angeordnet. Die Anordnung eines Empfängers an einem Werkzeug hat den Vorteil, daß durch den Werkzeugbetrieb verursachte Störungen weniger Störeinfluß haben. Je nachdem, ob an dem Werkzeug ein Sender oder ein Empfänger angeordnet ist, sind die dazugehörigen Gegenstücke, also die Empfänger bzw. die Sender, im Bereich des Montagebandes vorgesehen.

Gemäß einer bevorzugten Ausführungsform sind die nicht am Werkzeug angeordneten Empfänger oder Sender ortsfest im Raum angeordnet. Durch die Auswertung der Laufzeiten zwischen Sendern und zugeordneten Empfängern kann die Absolutposition des Werkzeugs im Raum angegeben werden.

Bei einem in allen Richtungen beweglichen Werkzeug sind 3 Sender (bei der Alternativausführung 3 Empfänger) notwendig, um eine eindeutige Festlegung im Raum zu erreichen. Ist das Werkzeug jedoch nur in einer bestimmten Richtung zum Fahrzeug bewegbar, kann auch schon ein einzelner Sender (bei der Alternativausführung 1 Empfänger) ausreichen.

Gemäß einer anderen Ausführungsform kann ein Sender (bei der Alternativausführung ein Empfänger) auch am Montageband beispielsweise mit einem bestimmten Werkstück mitbewegt werden, so daß über die Entfernungsmessung bereits eine Information hinsichtlich des Abstandes vom Werkzeug zum am Werkstück angeordneten Sender (alternativ Empfänger) getroffen werden kann.

Unter Zuhilfenahme der bereits vorhandenen Kenntnis von identifizierbaren Werkstücken auf dem Montageband und deren bekannten momentane Positionen kann aus der Position des an dem Werkzeug angeordneten Empfängers (alternativ Sender) eine zeitliche Zuordnung eines Werkzeug zu einem Werkstück getroffen werden. Je nach Erfassungsrate der Werkzeugposition lassen sich somit genau Aussagen darüber treffen, ob das Werkzeug an eine bestimmte Position eines Werkstücks mit einer bekannten Identifikation herangeführt worden ist. Durch Abspeicherung dieser Daten ist insgesamt eine Überprüfung möglich, ob einem Werkstück ein Werkzeug zugeführt worden ist.

Die erfindungsgemäße Vorrichtung und das erfindungsgemäße Verfahren lassen sich grundsätzlich für alle Werkzeuge einsetzen, bei denen die die Zuordnung zu einem Werkstück wichtig ist. Insgesamt ist die vorliegende Vorrichtung billiger und flexibler einzusetzen als bekannte mechanische Einrichtungen.

Gemäß einer vorteilhaften Ausführungsform werden als Sender Ultraschallsender und als Empfänger Ultraschallempfänger verwendet. Die Sender können nach und nach getriggerte Signale abgeben. Alternativ kann jeder Sender charakteristische Signale aussenden. Diese ausgesendeten Signale werden von der Empfangseinheit aufgenommen und den entsprechenden Sendern zugeordnet. Aus den Laufzeiten der Signale können dann die Abstände zwischen den jeweiligen Sendern und Empfängern berechnet und so die Lage des Werkzeugs ermittelt werden.

Wie oben bereits erwähnt, kann beim Einsatz von mindestens drei Sendern (alternativ drei Empfängern) eine eindeutige Positionsbestimmung auch bei einem Werkzeug erfolgen, welches frei bewegbar ist. Dabei kann ein Nullpunkt festgelegt und gegenüber diesem Nullpunkt die Lage des Werkzeugs angegeben werden.

Zur Überprüfung der Montageabläufe ist es von Vorteil, wenn die von einer Zuordnungseinheit gelieferten Zuordnungsdaten eines Werkzeugs zu einem Fahrzeug in einem Speicher, insbesondere einem nicht-flüchtigen Speicher abgelegt werden. Die Daten können auch auf einem aufzubewahrenden Speichermedium aufgenommen werden, so daß man auch über längere Zeit hinweg noch genau den Montageablauf überprüfen kann.

Gemäß einer bevorzugten Ausführungsform wird zusätzlich noch erfaßt und aufgezeichnet, ob das Werkzeug, beispielsweise ein Elektroschrauber, auch funktionsgemäß betrieben wurde. So läßt sich nicht nur die Heranführung des Werkzeugs zu einem bestimmten Fahrzeug sondern auch dessen funktionsgemäßer Betrieb in einem bestimmten Punkt nachvollziehen. Beispielsweise kann bei einem Elektroschrauber über das anliegende Moment bestimmt werden, ob die Verschraubung richtig durchgeführt wurde. Bei einer Betätigung des Elektroschraubers ohne diesen an der Schraube anzusetzen oder bei Abdrehen einer Schraube, entsteht kein erwartetes Moment, so daß keine ordnungsgemäße Verschraubung an einem bestimmten identifizierbaren Werkstück gemeldet werden kann. Solche Rückmeldungen von einwandfrei durchgeführten Arbeitsschritten können bei allen betätigbaren Werkzeugen erfolgen, und wiederum Werkstücken zugeordnet werden.

Die Erfindung wird nachfolgend anhand von Ausführungsbeispielen und mit Bezug auf die beiliegenden Zeichnungen näher erläutert Die Zeichnungen zeigen in
- Fig. 1: eine schematische Darstellung von auf einem Montageband angeordneten Fahrzeugen gegenüber einem an einem Werkzeug angeordneten Empfänger, dessen Position mittels Sendern ermittelt wird,
- Fig. 2: eine elektrische Schaltskizze für eine solche erfindungsgemäße Vorrichtung und
- Fig. 3: eine weitere schematische Darstellung von auf einem Montageband angeordneten Fahrzeugen gegeüber einem an einem Werkzeug angeordneten Sender, dessen Position mittels Empfänger ermittelt wird.

Die Erfindung wird nachfolgend anhand der Montage von Fahrzeugen beschrieben. Natürlich kann das erfindungsgemäße Verfahren auch für alle anderen Werkstücke eingesetzt werden, die an oder mit einem Montageband transportiert werden und identifizierbar sind.

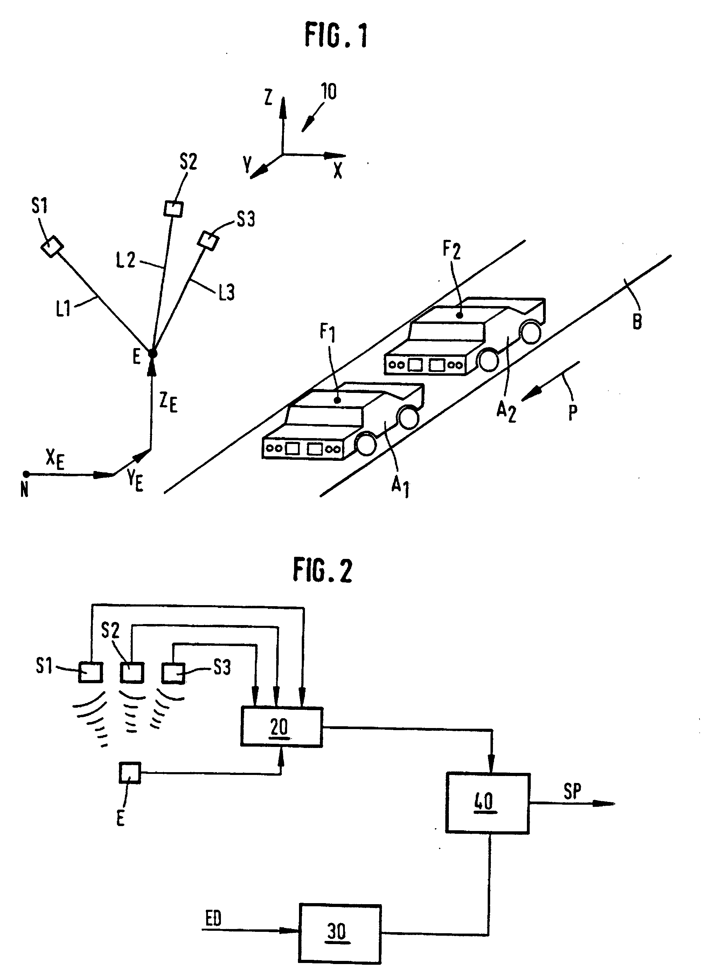

In Fig. 1 ist in schematischer Weise ein Montageband B dargestellt, auf dem sich verschiedene und eindeutig identifizierbare Fahrzeuge (vorliegend zwei) A₁ und A₂ befinden. Das Montageband B wird in Pfeilrichtung P bewegt. Jedem Fahrzeug A₁ und A₂ ist eine Fahrzeugposition F₁ bzw. F₂ zugeordnet: Wobei in einem (nicht dargestellten) Steuerungsleitsystem jede Fahrzeugposition eines gerade montierten Fahrzeugs bekannt ist. Diese Positionen können in einem definierten Koordinatensystem 10 angegeben werden.

Die Fahrzeugposition kann beispielsweise wie folgt ermittelt werden. Bei Einbringen eines Fahrzeugs A₁ auf das Montageband B wird dessen Fahrgestellnummer über einen Transponder in das Steuerungsleitsystem eingelesen. Überwacht man nun die Fortbewegung des Bandes, so kann man immer angeben, an welchem Bandpunkt sich das Fahrzeug gerade befindet.

Im Bereich des Montagebandes B ist ein Werkzeug, vorliegend ein Elektroschrauber (nicht weiter dargestellt) vorgesehen, an dem ein Empfänger E angeordnet ist. Bei dem Empfänger E handelt es sich um einen Ultraschallempfänger, der Signale von ortsfest in der Montagehalle montierten Ultraschallsendem S1, S2 und S3 empfängt. Über die verschiedenen, von einer später noch zu erläuternden Schaltung ausgewerteten Laufzeiten werden die Abstände L1, L2 und L3 zwischen dem Empfänger einerseits und den zugeordneten Sendern S1, S2 und S3 andererseits ermittelt. Aus diesen Abständen L1, L2 und L3 und den Positionen der Sender S1, S2 und S3 lassen sich insgesamt die Koordinaten des Empfängers (X_{E}, Y_{E}, Z_{E}) gegenüber einem definierten Nullpunkt N errechnen.

In Fig. 2 ist eine einfache und schematische Schaltskizze der oben beschriebenen erfindungsgemäßen Vorrichtung dargestellt. Demgemäß geben die Sender S1, S2 und S3 nach und nach getriggerte Ultraschallsignale aus, die von dem Empfänger E erfaßt werden. Über eine Auswerteeinheit 20, die einerseits mit den Sendern S1, S2 und S3 und andererseits mit dem Empfänger E verbunden ist, kann über die verschiedenen Laufzeiten und die bekannten Positionen der Sender auf den Ort des Empfängers in der Montagehalle geschlossen werden. Dieser Ort wird einer Zuordnungseinheit 40 zugeführt. Diese Zuordnungseinheit 40 erhält femer von einer Meldeeinrichtung 30 die verschiedenen auf dem Montageband B befindlichen Positionen F₁ und F₂ von Fahrzeugen A₁ und A₂. Durch einen Vergleich der einzelnen Positionen kann eine Zuordnung eines Werkzeugs oder einer Werkzeugposition zu einem identifizierten Fahrzeug erfolgen.

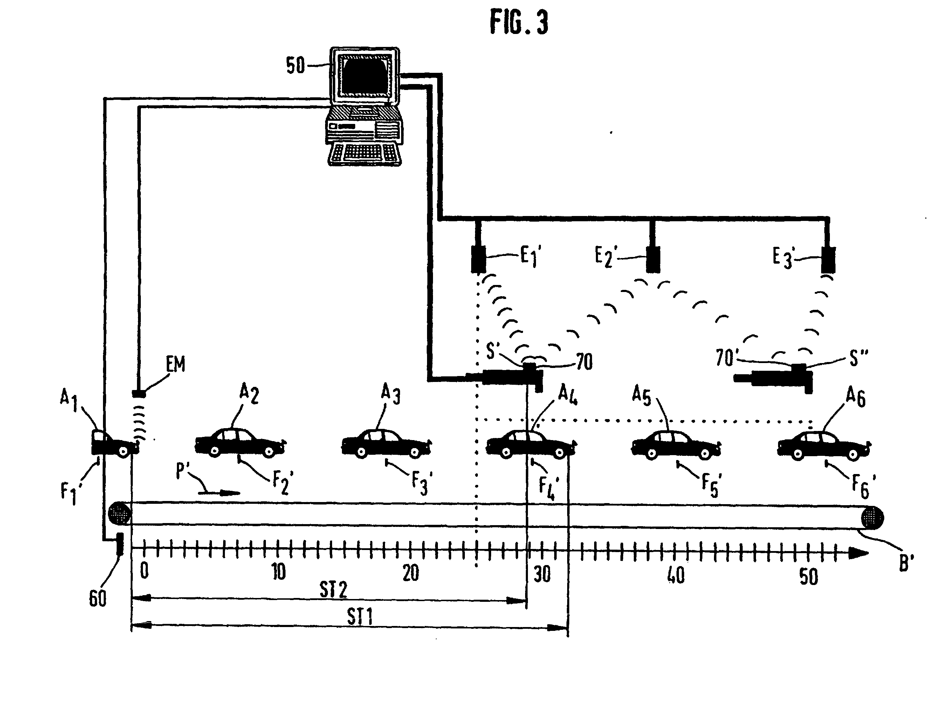

In Fig. 3 ist eine alternative Variante zu derjenigen in den Fig. 1 und 2 dargestellt. Hierbei ist die Anordnung von Sendern und Empfänger vertauscht. Wiederum in schematischer Weise ist ein Montageband B' dargestellt, auf dem sich verschiedene, eindeutig identifizierbare Fahrzeuge A₁', A₂', A₃', A₄', A₅' und A₆' befinden. Das Montageband B' wird in Pfeilrichtung P' bewegt. Jedem Fahrzeug A₁' bis A₆' ist eine Fahrzeugposition F₁' bis F₆' zugeordnet. Beim Einbringen der Fahrzeuge A₁' bis A₆' wird von diesem jeweils über einen Transponder eine Fahrzeugidentifizierung an ein Empfangsgerät EM abgegeben, welches die Information an einen Rechner 50 weiterleitet. Über eine Bandbewegungserfassungseinrichtung 60, welche ebenfalls mit dem Rechner verbunden ist, ist die Bandbewegung bekannt, so daß jede Fahrzeugposition auf dem Montageband B' nachvollziehbar ist. Diese Positionen können in einem definierten Koordinatensystem angegeben werden.

Im Bereich des Montagebandes B' sind zwei Werkzeuge 70, 70', vorliegend zwei Etektroschrauber, vorgesehen, an denen jeweils ein Sender S', S" angeordnet ist. Bei den Sendern S', S" handelt es sich wiederum um Ultraschallsender, deren Signale von ortsfest in der Montagehalle montierten Ultraschallemfängem E1', E2' und E3' empfangen werden. Über die verschiedenen Laufzeiten werden die Abstände zwischen den Sendem S', S" einerseits und den Empfängern E1'. E2' und E3' andererseits ermittelt. Aus diesen Abständen und den Positionen der Empfänger E1', E2' und E3' lassen sich insgesamt die Koordinaten des Senders gegenüber einem definierten Nullpunkt errechnen.

Gemäß Fig. 3 geben die Sender S' und S" und die Empfänger E1', E2', E3' ihre Signale an den Rechner 50 ab, der die in der Fig. 2 separat dargestellte Auswerteeinheit, Meldeeinrichtung und Zuordnungseinheit zentral umfaßt. Die Zuordnung der Werkzeuge 70 und 70' zu den einzelnen Fahrzeugen erfolgt analog wie in den Fig. 1 und 2 beschrieben. Vorliegend werden dabei die Position des Werkzeugs und die Positionen der Fahrzeuge F₁' bis F₆' miteinander verglichen, und ein Werkzeug 70, 70' wird einem bestimmten Fahrzeug dann zugeordnet, wenn die Abstände innerhalb bestimmter Bereiche liegen ST1, ST2.

Bei einer kontinuierlich durchgeführten Erfassung der Werkzeugposition kann die Hinzuführung eines Werkzeugs zu einem Fahrzeug nachvollzogen und überprüft werden. Wird zusätzlich noch der funktionsgemäße Werkzeugbetrieb, beispielsweise die zweckgemäße Bedienung des Elektroschraubers, erfaßt, so kann neben der Hinzuführung des Werkzeugs zu dem Fahrzeug auch noch die Ausführung eines bestimmten Montageverfahrens an einem identifizierten Fahrzeug festgehalten werden. Somit ist es auf einfache Weise möglich, zu überprüfen, ob alle mit einem Elektroschrauber durchzuführenden Verschraubungen richtig abgearbeitet worden sind. Verläßt dann ein Fahrzeug das Montageband, ohne daß zu diesem Fahrzeug die erforderlichen Verschraubungen vorgenommen wurde, so kann ein entsprechender Hinweis erfolgen. Alle Daten können auch in einem Speicher, beispielsweise des Rechners 50 abgelegt werden.

Das vorliegend beschriebene erfindungsgemäße Verfahren kann natürlich nicht nur bei der Montage von Fahrzeugen, sondern bei allen zu montierenden Werkstücken verwendet werden. Dabei können auch jegliche andere Werkzeuge Verwedung finden.

## Patentansprüche

1. Vorrichtung zur Zuordnung eines Werkzeugs zu einem auf einem Montageband beförderten Werkstück umfassend,
zumindest einen im Bereich eines Montagebandes angeordneten Sender (S1, S2, S3),
einen an dem Werkzeug angeordneten Empfänger (E),
eine Auswerteeinheit (20), die aus der oder den Laufzeiten des zumindest einen empfangenen Signals eine zugehörige Entfernung des Werkzeugs zu jedem Sender (S1, S2, S3) bestimmt,
**gekennzeichnet durch**
eine Meldeeinrichtung (30), die Positionen (F1, F2) von auf dem Montageband beförderten Werkstücken (A1, A2) ausgibt und
eine Zuordnungseinheit (40), welche aus der zumindest einen Entfernung des Werkzeugs zu dem zumindest einen Sender (S1, S2, S3) und den Werkstückpositionen (F1, F2) ein Werkzeug oder eine Werkzeugposition einem Werkstück (A1, A2) zuordnet.

2. Vorrichtung nach Anspruch 1,
**dadurch gekennzeichnet,**
**daß** die Sender (S1, S2, S3) ortsfest angeordnet und die Positionen der Sender bekannt sind.

3. Vorrichtung nach Anspruch 1,
**dadurch gekennzeichnet,**
**daß** die Sender (S1, S2, S3) sich mit einem zugeordneten Werkstück auf dem Montageband mitbewegen.

4. Vorrichtung nach einem der Ansprüche 1 bis 3,
**dadurch gekennzeichnet,**
**daß** wenigstens zwei Sender (S1, S2, S3) vorgesehen sind.

5. Vorrichtung nach einem der Ansprüche 1 bis 4,
**dadurch gekennzeichnet,**
**daß** die von der Zuordnungseinheit (40) gelieferten Daten (SP) in einem Speicher, insbesondere einem nicht-flüchtigen Speicher, gespeichert werden.

6. Vorrichtung nach einem der Ansprüche 1 bis 5,
**dadurch gekennzeichnet,**
**daß** die Sender (S1, S2, S3) ihre Signale getriggert abgeben, und/oder
**daß** bei mehreren Sendern (S1, S2, S3) die Sender ihre Signale in einer bestimmten Reihenfolge abgeben, und/oder
**daß** die von einem Sender abgegebenen Signale für den jeweiligen Sender charakteristisch sind, und/oder
**daß** als Sender (S1, S2, S3) Ultraschallsender und als Empfänger (E) Ultraschallempfänger verwendet sind, und/oder
**daß** ein Koordinaten-Nullpunkt (N) festgelegt ist, gegenüber dem die Position des Werkzeugs ermittelt wird, und/oder
**daß** der funktionsgemäße Betrieb eines Werkzeugs erfaßbar ist, und/oder
**daß** der Betrieb des Werkzeugs ebenfalls in einem Speicher abgelegt ist, und/oder
**daß** die Werkzeugspositionsbestimmung in bestimmten zeitlichen Abständen und/oder in Abhängigkeit von der Montagebandposition und/oder nach einer gezielten Aktivierung erfolgt.

7. Vorrichtung zur Zuordnung eines Werkzeugs zu einem auf einem Montageband beförderten Werkstück umfassend,
zumindest einen im Bereich eines Montagebandes angeordneten Empfänger (E1', E2', E3'),
einen an dem Werkzeug angeordneten Sender (S'),
eine Auswerteeinheit, die aus den Laufzeiten des empfangenen Signals eine zugehörige Entfernung des Werkzeugs zu jedem Empfänger (E1', E2', E3') bestimmt,
**gekennzeichnet durch**
eine Meldeeinrichtung, die Positionen (F1', F2') von auf dem Montageband beförderten Werkstücken (A1', A2') ausgibt und
eine Zuordnungseinheit, welche aus der zumindest einen Entfernung des Werkzeugs zu dem zumindest einen Empfänger (E1', E2', E3') und den Werkstückpositionen (F1', F2') ein Werkzeug oder eine Werkzeugposition einem Werkstück (A1', A2') zuordnet.

8. Vorrichtung nach Anspruch 7,
**dadurch gekennzeichnet,**
**daß** die Empfänger (E1', E2', E3') ortsfest angeordnet und die Positionen der Empfänger bekannt sind, und/oder
**daß** die Empfänger (E1', E2', E3') sich mit einem zugeordneten Werkstück auf dem Montageband mitbewegen, und/oder
**daß** wenigstens zwei Empfänger (E1', E2', E3') vorgesehen sind, und/oder
**daß** die von der Zuordnungseinheit gelieferten Daten in einem Speicher, insbesondere einem nicht-flüchtigen Speicher, gespeichert werden, und/oder
**daß** bei mehreren Sendern (S', S") die Sender ihre Signale in einer bestimmten Reihenfolge abgeben, und/oder
**daß** die von einem Sender (S', S") abgegebenen Signale für den jeweiligen Sender charakteristisch sind, und/oder
**daß** als Sender (S', S") Ultraschallsender und als Empfänger (E1', E2', E3') Ultraschallempfänger verwendet sind, und/oder
**daß** ein Koordinaten-Nullpunkt (N) festgelegt ist, gegenüber dem die Position des Werkzeugs ermittelt wird, und/oder
**daß** der funktionsgemäße Betrieb eines Werkzeugs erfaßbar ist, und/oder
**daß** der Betrieb des Werkzeugs ebenfalls in einem Datenspeicher abgelegt ist, und/oder
**daß** die Werkzeugspositionsbestimmung in bestimmten zeitlichen Abständen und/oder in Abhängigkeit von der Montagebandposition und/oder nach einer gezielten Aktivierung erfolgt.

9. Verfahren zur Zuordnung eines Werkzeugs zu einem auf einem Montageband beförderten Werkstück umfassend die Schritte,
Ermitteln der Laufzeiten jedes von einem Sender (S1, S2, S3, S', S") emittierten und einem Empfänger (E, E1', E2', E3') detektierten Signales, wobei am Werkzeug entweder ein Sender (S', S") oder ein Empfänger (E) und das Gegenstück am Montageband oder ortsfest angeordnet ist,
Bestimmen der Entfernungen zwischen Sender (S1, S2, S3, S', S") und Empfänger (E, E1', E2', E3'),
Bestimmen und Angeben der Positionen (F1, F2, F1', F2') von Werkstücken (A1, A2, A1', A2') auf dem Montageband (B),
Zuordnen des Werkzeugs oder der Werkzeugposition zu einem Werkstück (A1, A2, A1', A2') aus den Entfernungen des Werkzeugs zu dem zumindest einen Sender (S1, S2, S3) oder dem zumindest einen Empfänger (E1', E2', E3') einerseits und den Werkstückpositionen andererseits.

10. Verfahren nach Anspruch 9,
**dadurch gekennzeichnet,**
**daß** aus den Entfernungen zu den einzelnen Sendern (S1, S2, S3) oder zu den einzelnen Empfängern (E1', E2', E3') die Position des Werkzeugs im Raum bestimmt wird, und/oder
**daß** die funktionsrichtige Handhabung eines Werkzeugs festgestellt wird und einem bestimmten Werkstück zugeordnet abgespeichert wird.

## Claims

1. A device for allocating a tool to a work piece conveyed on an assembly belt, comprising
at least one transmitter arranged in the region of an assembly belt (S₁, S₂, S₃).
a receiver (E) arranged on the tool,
an evaluation unit (20), which determines from the one or the many transit times of the at least one signal received an associated distance of the tool to each transmitter (S₁, S₂, S₃),
**characterised by**
a reporting device (30), which transmits positions (F₁, F₂) of the work pieces (A₁ A₂) conveyed by the assembly belt and
an allocating unit (40) which from the at least one distance of the tool to the at least one transmitter (S₁, S₂, S₃) and the work piece positions (F₁, F₂) allocates a tool or a tool position to a work piece (A₁, A₂).

2. A device according to Claim 1, **characterised in that** the transmitters (S₁, S₂, S₃), are arranged at fixed sites and the positions of the transmitters are known.

3. A device according to Claim 1, **characterised in that** the transmitters (S₁, S₂, S₃), move with the allocated work piece on the assembly belt.

4. A device according to any one of Claims 1 to 3, **characterised in that** at least two transmitters (S₁, S₂, S₃),) are provided.

5. A device according to any one of Claims 1 to 4 **characterised in that** the data (SP) delivered from the allocating unit (40) are filed in a store, especially a non-volatile store.

6. A device according to any one of Claims 1-5, **characterised in that** the transmitters (S₁, S₂, S₃),transmit their signals when triggered, and/or the transmitters of a plurality of transmitters (S₁, S₂, S₃),transmit their signals in a determined sequence and/or that the signals transmitted from a transmitter are characteristic of the individual transmitter, and/or
that as the transmitter (S₁, S₂, S₃),ultrasound transmitters and as the receiver (E) ultrasound receivers are used, and/or
that a coordinate null point (N) is established against which the position of the tool is calculated, and/or
that the operation of a tool in accordance with its function can be captured and/or that the operation of the tool is similarly filed in a store and/or
that the determination of the tool position is effected at determined time intervals and/or in dependency on the position of the assembly belt and/or after a targeted activity has been achieved.

7. A device for the allocation of a tool to a work piece conveyed on an assembly belt comprising,
at least one receiver (E₁, E₂, E₃), arranged in the region of an assernbly belt,
a transmitter (S') arranged on the tool,
an evaluation unit which determines from the transit times of the received signal an individual distance of the tool to each receiver (E₁', E₂', E₃'),
**characterised by** a reporting unit which transmits the positions (F₁', F₂') from the work pieces (A₁', A₂') on the assembly belt and an allocation unit which from the at least one distance of the tool to the at least one receiver (E₁', E₂', E₃') and the work piece positions (F₁', F₂') allocates a tool or a tool position to a work piece (A₁', A₂').

8. A device according to Claim 7, **characterised in that** the receivers (E₁', E₂', E₃') are arranged at fixed positions and the positions of the receivers are known, and/or
that the receivers (E₁', E₂', E₃') move with the allocated work piece on the assembly belt and/or
that at least two receivers ((E₁', E₂', E₃')are provided and/or
that the data delivered from the allocating unit are filed in a store especially a non volatile store and/or
that several transmitters (S', S") transmit their signals in a determined sequence, and/or
that the signals transmitted by the transmitters (S', S") are characteristic for the individual transmitter and/or
that as transmitters (S', S") ultrasound transmitters and as receivers (E₁', E₂', E₃') ultrasound receivers are used, and/or
that a coordinate null point (N) is established against which the position of the tool is calculated, and/or
that the operation of the tool in accordance with its function can be captured, and/or
that the operation of the tool is similarly filed in a data store, and/or
that the determination of the tool position is effected at determined time intervals and/or depending upon the assembly belt position and/or after a targeted activity has been achieved.

9. A method for the allocation of a tool to a work piece conveyed on an assembly belt comprising the stages,
obtaining the transit times of each signal transmitted from a transmitter (S₁, S₂, S₃, S', S") and detected by a receiver (E, E'₁, E₂', E₃') whereby at the tool either a transmitter (S', S") or a receiver (E) is arranged and the counterpart is arranged on the assembly belt or at a fixed position,
determination of the distances between transmitters (S₁, S₂, S₃, S', S") and the receivers (E, E₁', E₂', E₃'),
determination and transmission of the positions (F₁, F₂, F₁', F₂') from the work pieces (A₁, A₂, A1', A₂') on the assembly belt (B),
allocation of the tool or the tool position to a work piece (A₁, A₂, A₁', A₂') from the distances of the tool to the at least one transmitter (S₁, S₂, S₃) or to the at least one receiver (E₁', E₂', E₃') on the one hand and the work piece positions on the other hand.

10. A method according to claim 9, **characterised in that** from the distances to the individual transmitters (S₁, S₂, S₃) or to the individual receivers (E₁', E₂', E₃') the position of the tool in space is determined and/or
that the functionally correct handling of a tool is established and is stored as allocated to a particular work piece.

## Revendications

1. Dispositif pour associer un outil à une pièce transportée par une chaîne de montage comprenant :
- au moins un émetteur (S1, S2, S3) installé au niveau de la chaîne de montage,
- un récepteur (E) associé à l'outil,
- une unité d'exploitation (20) qui détermine l'éloignement de l'outil par rapport à chaque émetteur (S1, S2, S3) à partir du ou des temps de parcours d'au moins un signal de réception,
**caractérisé en ce qu'**
- une installation de signalisation (30) émet la position (F1, F2) de pièces (A1, A2) transportées sur la chaîne de montage, et
- une unité d'association (40) associe à une pièce (A1, A2) un outil ou une position d'outil, à partir d'au moins l'éloignement de l'outil par rapport à au moins un émetteur (S1, S2, S3) et des positions de la pièce (F1, F2).

2. Dispositif selon la revendication 1,
**caractérisé en ce que**
les émetteurs (S1, S2, S3) sont installés de manière fixe et leur position est connue.

3. Dispositif selon la revendication 1,
**caractérisé en ce que**
les émetteurs (S1, S2, S3) se déplacent sur la chaîne de montage avec la pièce associée.

4. Dispositif selon l'une quelconque des revendications 1 à 3,
**caractérisé par**
au moins deux émetteurs (S1, S2, S3).

5. Dispositif selon l'une quelconque des revendications 1 à 4,
**caractérisé en ce que**
les données (SP) fournies par l'unité d'association (40) sont enregistrées dans une mémoire notamment une mémoire non volatile.

6. Dispositif selon l'une quelconque des revendications 1 à 5,
**caractérisé en ce que**
les émetteurs (S1, S2, S3) émettent des signaux par déclenchement, et/ou
en cas de plusieurs émetteurs (S1, S2, S3), les émetteurs émettent leurs signaux dans un ordre déterminé, et/ou
les signaux émis par un émetteur sont caractéristiques de cet émetteur et/ou
comme émetteur (S1, S2, S3) on a des émetteurs à ultrasons et comme récepteurs (E) des récepteurs à ultrasons, et/ou
on fixe un point zéro de coordonnées (N) et on le détermine par rapport à la position de l'outil, et/ou
on saisit la mise en oeuvre fonctionnelle d'un outil, et/ou
on enregistre le fonctionnement de l'outil également dans une mémoire, et/ou
on détermine la position de l'outil à des intervalles de temps donnés et/ou en fonction de la position de montage et/ou de la mise en oeuvre voulue.

7. Dispositif pour associer un outil à une pièce transportée sur une chaîne de montage comprenant :
un récepteur (E1', E2', E3') installé au moins au niveau de la chaîne de montage
un émetteur (S') associé à l'outil
une unité d'exploitation qui détermine l'éloignement correspondant de l'outil par rapport à chaque récepteur (E1', E2', E3') en fonction des temps de parcours des signaux reçus,
**caractérisé par**
une installation de signalisation qui émet les positions (F1', F2') des pièces (A1', A2') transportées sur la chaîne de montage, et
une unité d'association qui, à partir d'un éloignement de l'outil vers au moins un récepteur (E1', E2', E3') et les positions des pièces (F1', F2'), associe un outil ou une position d'outil à une pièce (A1', A2').

8. Dispositif selon la revendication 7,
**caractérisé en ce que**
les récepteurs (E1', E2', E3') sont fixes et la position des récepteurs est connue et/ou
les récepteurs (E1', E2', E3') se déplacent avec la pièce associée sur la chaîne de montage et/ou
au moins deux récepteurs (E1', E2', E3') sont prévus et/ou
les données fournies par l'unité d'association sont enregistrées dans une mémoire notamment une mémoire non volatile et/ou
en cas plusieurs émetteurs (S', S"), ceux-ci émettent leurs signaux dans un ordre déterminé et/ou
les signaux émis par un émetteur (S', S") sont caractéristiques de chaque émetteur et/ou
les émetteurs (S', S") sont des émetteurs à ultrasons et les récepteurs (E1', E2', E3') sont des récepteurs à ultrasons et/ou
on fixe un point zéro de coordonnées (N) par rapport auquel on détermine la position de l'outil et/ou
on saisit la mise en oeuvre fonctionnelle d'un outil et/ou
on enregistre le fonctionnement de l'outil également dans une mémoire de données et/ou
on détermine la position de l'outil des intervalles de temps déterminés et/ou en fonction de la position de la chaîne de montage et/ou après une mise en oeuvre précise.

9. Procédé d'association d'un outil à une pièce se trouvant sur une chaîne de montage comprenant les étapes suivantes :
- on détermine les temps de parcours de chaque signal émis par un émetteur (S1, S2, S3, S', S") et reçu par un récepteur (E, E1', E2', E3'), l'outil comportant soit un émetteur (S', S") soit un récepteur (E) et la pièce correspondante est prévue sur la chaîne de montage ou est fixe,
- on détermine l'éloignement entre les émetteurs (S1, S2, S3, S', S") et les récepteurs (E, E1', E2', E3').
- on détermine et on indique les positions (F1, F2, F1', F2') des pièces (A1, A2, A1', A2') sur la chaîne de montage (B),
- on associe l'outil ou la position de l'outil à une pièce (A1, A2, A1', A2') à partir de l'éloignement de la pièce par rapport à au moins un émetteur (S1, S2, S3) ou au moins un récepteur (E1', E2', E3') d'une part et les positions des pièces d'autre part.

10. Procédé selon la revendication 9,
**caractérisé en ce qu'**
à partir de l'éloignement par rapport aux différents émetteurs (S1, S2, S3) ou des différents récepteurs (E1', E2', E3') on détermine la position de l'outil dans l'espace et/ou
on détermine l'utilisation correcte d'un outil et on l'enregistre en association avec un certain outil.
